(19) Europäisches Patentamt
European Patent Office
Office européen des brevets

(11) **EP 2 581 787 B1**

(12) **EUROPÄISCHE PATENTSCHRIFT**

(45) Veröffentlichungstag und Bekanntmachung des Hinweises auf die Patenterteilung:
**18.03.2020 Patentblatt 2020/12**

(51) Int Cl.:
*H01S 3/083* (2006.01)    *G02F 1/39* (2006.01)
*G02F 1/1347* (2006.01)

(21) Anmeldenummer: **12007012.3**

(22) Anmeldetag: **10.10.2012**

(54) **Optischer Resonator für einen Laserstrahl**

Optical resonator for a laser beam

Résonateur optique pour un faisceau laser

(84) Benannte Vertragsstaaten:
**CZ DE DK ES FR GB IT NL NO PL RS SE**

(30) Priorität: **11.10.2011 DE 102011115543**

(43) Veröffentlichungstag der Anmeldung:
**17.04.2013 Patentblatt 2013/16**

(73) Patentinhaber: **Institut Franco-Allemand de Recherches de Saint-Louis 68301 Saint-Louis Cedex (FR)**

(72) Erfinder: **Eichhorn, Marc, D.**
**79736 Rickenbach (DE)**

(56) Entgegenhaltungen:
**US-A- 4 818 087     US-A1- 2008 013 588**
**US-B1- 6 647 033     US-B1- 8 514 906**

**Beschreibung**

Die Erfindung betrifft einen optischen Resonator für einen Laserstrahl.

Aus der US 6 775 054 B1 ist ein Resonator bekannt, der unter der Bezeichnung RISTRA-Resonator bekannt ist. Hierbei umfasst der Resonator genau vier Spiegel, die einen Ringresonator bilden. Jeweils ein Strahlweg verbindet zwei aufeinander folgende Spiegel miteinander. Die Spiegel sind in zwei Ebenen angeordnet. Ein erster Strahlweg und ein in Umlaufrichtung folgender Strahlweg bilden eine erste Ebene, wogegen die beiden übrigen Strahlwege eine zweite Ebene bilden. Die beiden unterschiedlichen Ebenen stehen senkrecht aufeinander und erzeugen im Betrieb eine Bildrotation, die eine Rotation des querschnittlichen Strahlbildes des Laserstrahls ist. Im bekannten Fall sind die vier Spiegel derart räumlich angeordnet, dass im Betrieb die Bildrotation pro Umlauf 90° beträgt. Es erfolgen genau vier Umläufe im Resonator, bis an einem gleichen Ort innerhalb des Strahlenganges des Resonators die ursprüngliche Ausrichtung des Strahlbildes wieder vorliegt. Der Resonator ist beispielsweise als optisch parametrischer Oszillator (OPO) einsetzbar. Hierzu wird in den Strahlengang des Resonators ein optisch parametrischer Verstärker (OPA) eingebaut. Der OPO wird mit einer Pumplaserstrahlung gepumpt. Der OPA erzeugt eine Idler- und Signal-Strahlung. Eine Austrittslaserstrahlung, zum Beispiel die Idler-Strahlung, verlässt den OPO über einen teildurchlässigen Spiegel. Die Pumpstrahlung ist für medizinische und militärische Anwendungen ein hochenergetischer Laserpuls. Durch die hohe Verstärkung und den großen Strahldurchmesser, welcher auf Grund der Vermeidung optischer Zerstörschwellen benötigt wird, resultieren hohe Fresnel-Zahlen für einen optischen Resonator und dadurch eine üblicherweise schlechte (Multimode-) Strahlqualität. Die Bildrotation um 90° bewirkt nun eine laterale Synchronisation der Phase, wodurch im Vergleich zu einem einfachen planaren Resonator die Anzahl höherer Moden verringert und die Strahlqualität verbessert wird. Als Ergebnis weist der Austrittslaserstrahl jedoch ein leicht quadratisches Profil auf, welches die Symmetrie der Bildrotation widerspiegelt. Dadurch wird im RISTRA mit Nachteil für die Strahlqualität ein leicht quadratisches Profil erzeugt.

Aus der US 2010/0079851 A1 ist ein weiterer Resonator bekannt. Bei diesem Bekannten umfasst der optische Resonator genau sechs Spiegelflächen, die einen Ringresonator bilden. Jeweils ein Strahlweg verbindet zwei aufeinander folgende Spiegelflächen miteinander. Die Spiegelflächen sind in zwei Ebenen angeordnet, um im Betrieb eine Bildrotation zu erzeugen, die eine Rotation des querschnittlichen Strahlbildes des Laserstrahls ist. Ferner werden zwei Spiegelflächen durch ein Penta-Prisma gebildet. Die Spiegel sind derart räumlich angeordnet, dass im Betrieb die Bildrotation pro Umlauf 90° beträgt. Wie auch beim zuvor diskutierten RISTRA-Resonator, bewirkt eine Bildrotation um genau 90°, dass der zusammengesetzte Austrittslaserstrahl ein leicht quadratisches Profil aufweist.

Die US 2008/0013588 A1 (Fig. 4) zeigt einen gattungsgemäßen optischen Resonator für einen Laserstrahl. Der optische Resonator umfasst mehrere Spiegel, die einen Ringresonator bilden. Jeweils ein Strahlweg verbindet zwei aufeinander folgende Spiegel miteinander. Die Spiegel sind in unterschiedlichen Ebenen angeordnet, um im Betrieb eine Bildrotation zu erzeugen, die eine Rotation des querschnittlichen Strahlbildes des Laserstrahls ist. Die Spiegel sind derart räumlich angeordnet, dass der Bildrotationswinkel pro Resonatorumlauf derart ist, dass mindestens fünf Resonatorumläufe notwendig sind, bis die ursprüngliche Strahlbildorientierung im Wesentlichen wiederhergestellt ist. Hierdurch soll ein gleichmäßiges Intensitätsprofil des Laserstrahls erzielt werden.

Die US 4 818 087 A und die US 6 647 033 B1 zeigen jeweils einen weiteren gattungsgemäßen nichtplanaren Ringresonator für einen Laserstrahl.

Der Erfindung liegt die Aufgabe zu Grunde, einen gattungsgemäßen Resonator so auszubilden, dass die Strahlqualität bei vorteilhafter Ausführung hoch ist.

Diese Aufgabe wird erfindungsgemäß durch die Merkmale des Anspruches 1 gelöst.

Hierbei sind die Spiegel derart räumlich angeordnet,

dass der Bildrotationswinkel pro Resonatorumlauf derart ist,

dass mindestens fünf Resonatorumläufe notwendig sind, bis die ursprüngliche Strahlbildorientierung im Wesentlichen wiederhergestellt ist.

Die Idee liegt darin, eine gute Strahlqualität bei großen Strahldurchmessern zu erzeugen. Bei großen Strahldurchmessern $2a$ einer Strahlung der Wellenlänge $\lambda$ in einem Resonator der Länge $L$, das heißt großen Fresnelzahlen $N_F$,

wobei $N_F = \dfrac{a^2}{\lambda L}$, haben Resonatormoden höherer Ordnung geringe Beugungsverluste und oszillieren daher gleichzeitig mit der Grundmode. Diese Moden haben jede für sich, verglichen zur Grundmode, bereits eine schlechtere Strahlqualität. Das gleichzeitig unkorrelierte Auftreten dieser Moden verschlechtert die Strahlqualität zusätzlich. Bildlich gesprochen besitzt der emittierte Laserstrahl im Querschnittsprofil daher flächige Zonen, deren Phase nicht zueinander in fester Beziehung stehen. Die Vorteile zeigen sich bei einer Fresnelzahl von >>1.

Dieses Problem wird dadurch gelöst, dass das Strahlprofil symmetrisiert oder unter bestimmten Bedingungen eine Korrelation der lateralen Phase erzwungen wird. Damit dies zu einer starken Verbesserung der Strahlqualität führt, muss diese Korrelation möglichst homogen erfolgen. Dies geschieht durch eine Bildrotation im Resonator, wodurch eine kleine Region im Strahlprofil um einen Punkt mit transversalen Koordinaten $(r, \theta)$ nach

einem Resonatorumlauf auf eine kleine Region um den Punkt $(r,\varphi)$ in der identischen Querschnittsebene abgebildet wird. $|\varphi-\theta|$ entspricht dabei der Bildrotation. Dadurch werden die Phasen dieser beiden Regionen synchronisiert. Mehrfachumläufe verursachen daher eine ringförmige Korrelation.

Da für eine gute Strahlqualität ein möglichst rundes Strahlprofil vorteilhaft ist, soll es mindestens 5 Umläufe erfordern, bevor ein Punkt $(r,\theta)$ wieder auf sich abgebildet wird. Dieser Minimalfall besitzt daher eine 5-fache Symmetrie, welche einen runden Strahl schon viel besser annähert als zum Beispiel ein Quadrat, wie es beim RISTRA durch die 90° Bildrotation vorkommt.

Nachfolgend wird dargelegt, was unter Wiederherstellung einer im Wesentlichen ursprünglichen Bildorientierung zu verstehen ist. Insbesondere geht es um die Auslegung des Begriffes "im Wesentlichen".

Die vorgenannte wiederherzustellende, im Wesentlichen ursprüngliche Bildorientierung ist die

- ursprüngliche Bildorientierung ± 4°, wenn weniger als 10 Umläufe zur Bildwiederholung erforderlich sind.
- ursprüngliche Bildorientierung ± 1 bis 4°, wenn 10 bis 100 Umläufe zur Bildwiederholung erforderlich sind.
- ursprüngliche Bildorientierung ± 1°, wenn mehr als 100 Umläufe zur Bildwiederholung erforderlich sind.

Ohne die Formulierung mit "im Wesentlichen" könnte zum Beispiel ein ungenau gefertigter Ristra-Resonator vom Wortlaut des Einzelmerkmals des Anspruches 1 erfasst werden. Beträgt zum Beispiel die Bildrotation pro Umlauf bei einem ungenau gefertigten Ristra-Resonator $(89 + Pi/4)°$, dann wird rein rechnerisch selbst nach unendlich vielen Umläufen der Strahlung im Resonator die ursprüngliche Strahlbildorientierung nie exakt wiederhergestellt sein. Tatsächlich werden jedoch nur 4 Umläufe benötigt, um im Wesentlichen die ursprüngliche Bildorientierung zu erhalten.
Gemäß der Erfindung ist vorgesehen,

- dass der optische Resonator genau sechs Spiegel und sechs Strahlwege umfasst, derart,
- dass ein erster Strahlweg einen ersten Spiegel mit einem zweiten Spiegel, ein zweiter Strahlweg den zweiten mit einem dritten Spiegel, ein dritter Strahlweg den dritten Spiegel mit einem vierten Spiegel, ein vierter Strahlweg den vierten Spiegel mit einem fünften Spiegel, ein fünfter Strahlweg den fünften Spiegel mit einem sechsten Spiegel und der sechste Strahlweg den sechsten Spiegel mit dem ersten Spiegel miteinander verbindet,
- dass der erste Strahlweg mit dem endseitigen ersten Spiegel und zweiten Spiegel parallel zum vierten Strahlweg mit dem endseitigen vierten und fünften Spiegel angeordnet ist und beide parallelen Strahlwege eine Grundebene bilden,

- dass der dritte Spiegel und der sechste Spiegel, also die beiden Spiegel, die nicht endseitig des ersten Strahlweges und vierten Strahlweges angeordnet sind, jeweils außerhalb der Grundebene angeordnet sind.

Obgleich genau 6 Spiegel zu Einsatz kommen, liegt der große Vorteil darin, dass der erste Strahlweg und vierte Strahlweg längenvariabel zum variablen Einbau von optischen Bauteilen unter Beibehaltung der Längen und der räumlichen Ausrichtung der übrigen Strahlwege sind. Ein Einbau eines größeren optischen Bauteiles führt daher lediglich zu einer Längenzunahme in einer Richtung. Beim RISTRA-Resonator dagegen müssen alle Strahlwege verlängert werden, möchte man nur einen der Strahlwege verlängern, um zum Beispiel eine größeres optisches Bauteil einzubauen. Aufgrund der 6 Spiegel erspart man sich gegenüber der US 2010/0079851 ein kostenträchtiges Pentaprisma.

Gemäß einer Ausgestaltung der Erfindung sind die Spiegel derart räumlich angeordnet, dass der Bildrotationswinkel zusätzlich das Kriterium erfüllt, dass er aus dem Winkelbereich 90° bis 180° ausgewählt wird, wobei der Winkelbereich für Modulo 360° und für beide Drehrichtungen gilt. Es ist von Vorteil, im Design des Resonators nicht den kleinsten Bildrotationswinkel zu wählen, sondern denjenigen, welcher im Bereich von 90° bis 180° liegt. Damit findet bereits nach wenigen Umläufen eine langreichweitige Synchronisation über den Querschnitt statt, welche ein robusteres und störungs-unanfälligeres Strahlprofil erzeugt. Anders ausgedrückt bedeutet dies, dass bereits nach wenigen Umläufen ein hohes Maß an Symmetrie entsteht.

Gemäß einer vorteilhaften Ausgestaltung der Erfindung ist im Strahlengang des Resonators ein optisches Verstärkermedium zur Ausbildung eines cw-Laserstrahls angeordnet. Die Anzahl der nötigen Umläufe im Resonator bis zur Wiederherstellung der im Wesentlichen ursprünglichen Strahlbildorientierung wird nach 10 bis 30 % der Kohärenzzeit erreicht. Dies wird genauer erläutert. Eine Bildrotation durch Erhöhung der Symmetrie des Laserstrahls ergibt bereits eine Verbesserung der Strahlqualität. Eine zusätzliche Steigerung der Strahlqualität erhält man jedoch bei einer optimalen Phasensynchronisation. Dazu ist es zum einen erforderlich, dass viele Umläufe zur Bildwiederherstellung und hohen Synchronisation innerhalb der Kohärenzzeit $\tau_{coh}$ der Strahlung stattfinden. Diese ist zum Beispiel mit der vollen Halbwerts-Linienbreite $\Delta\nu$ der Strahlung über

$$\tau_{coh} = \frac{1}{2\pi\Delta\nu}$$

verknüpft. Äquivalent bedeutet dies, dass die Kohärenzlänge

$$L_{coh} = c\,\tau_{coh}$$

mindestens den aufaddierten Umlaufwegen zur Bildwiederholung entspricht. Vorteilhaft ist dabei, wenn die Anzahl der notwendigen Umläufe bis zur Wiederherstellung der im Wesentlichen ursprünglichen Strahlbildorientierung bzw. die gewünschte Symmetrie nach zum Beispiel 20 % der Kohärenzzeit erreicht werden. Dann wirkt sich während der restlichen 80% der Kohärenzzeit das vollständig synchronisierte Strahlprofil auf den Strahl aus. Die Betrachtung der Kohärenzzeit gilt insbesondere bei kontinuierlichen (cw), schmalbandigen Lasern bzw. bei entsprechenden, geseedeten Lasern und Oszillatoren.

Gemäß einer Ausgestaltung der Erfindung ist im Strahlengang des Resonators ein optischer Verstärker zur Ausbildung eines Pulslaserstrahls angeordnet. Die Anzahl der nötigen Umläufe im Resonator bis zur Wiederherstellung der im Wesentlichen ursprünglichen Strahlbildorientierung wird nach 10 bis 30 % der Pulsdauer erreicht. Bei Pulslasern oder gepulsten OPOs gilt als Kriterium, dass die nötige Umlaufanzahl bis zur Bildwiederholung oder die erforderliche Symmetrie innerhalb der Pulsdauer erreicht werden. Vorteilhaft ist es, wenn dies bereits nach etwa 20 % der Pulsdauer erreichbar ist. Dann wirkt sich während der restlichen 80 % der Pulsdauer das vollständig synchronisierte Strahlprofil auf den Strahl aus.

Gemäß einer Ausgestaltung der Erfindung sind im Strahlengang ein doppelbrechendes Medium oder ein strahlversetzendes Element angeordnet. Bei der Verwendung von doppelbrechenden Kristallen innerhalb des Resonators, wie im Fall eines optisch parametrischen Oszillators, tritt in einer Richtung zusätzlich ein sogenannter Walk-off Effekt auf. In diesem Fall wird der Punkt $(r,\theta)$ auf den Punkt $(r',\varphi)$ abgebildet, wodurch eine noch bessere, flächige Korrelation bei vielen Umläufen erfolgt. Dies kann in einer Laseranordnung auch durch Einbringen eines zusätzlichen, passiven doppelbrechenden Kristalls oder eines strahlversetzenden optischen Elements erzwungen werden.

Gemäß einer weiteren Ausgestaltung der Erfindung ist vorgesehen, dass im ersten Strahlweg und/oder vierten Strahlweg, also den parallel zueinander verlaufenden Strahlwegen, ein oder mehrere optische Verstärkermedien angeordnet sind. Das optische Verstärkermedium kann ein parametrischer Verstärker (OPA) sein. Mit dem Einbau mindestens eines optisch parametrischen Verstärkers bildet man den Resonator als parametrischen oszillierenden Verstärker aus. Dies stellt das hauptsächliche Anwendungsgebiet des Resonators dar. Der Resonator kann allerdings ebenfalls bei Hochleistungslasern eingesetzt werden, bei denen ebenfalls hohe Werte der Fresnelzahl auf Grund großer Strahlquerschnitte gegeben sind.

Gemäß einer weiteren Ausgestaltung der Erfindung ist vorgesehen, dass der erste Spiegel gegenüber dem zweiten Spiegel, der fünfte Spiegel gegenüber dem vierten Spiegel und der sechste Spiegel gegenüber dem dritten Spiegel um eine Spiegelachse spiegelsymmetrisch angeordnet sind. Der symmetrische Aufbau vereinfacht die Berechnung und Konstruktion.

Gemäß einer weiteren Ausgestaltung der Erfindung ist vorgesehen, dass die Spiegel derart räumlich angeordnet sind, dass die Spiegel alle einen gleichen Einfallswinkel für den umlaufenden Laserstrahl aufweisen. Diese Maßnahme führt zu einer erheblichen Kostenreduzierung aufgrund der Teile-Gleichheit. Bis auf Auskoppelspiegel können alle Spiegel die gleichen Herstellungsschritte aufweisen und gleich beschichtet werden.

Ausführungsbeispiele der Erfindung werden nachfolgend der Zeichnungen näher erläutert. Dabei zeigen:

Fig. 1a einen optischen Resonator mit sechs Spiegeln, in perspektivischer Darstellung;
Fig. 1b den in Fig. 1a gezeigten optischen Resonator, jedoch mit zusätzlichen Hilfslinien;
Fig. 2a bis 2e eine Illustration, wie sich aus rotierenden Strahlbildern ein zusammengesetztes Strahlbild ergibt, bei einem Bildrotationswinkel nach dem Stand der Technik von 90°;
Fig. 3 ein zusammengesetztes Strahlbild bei 5 Umläufen zur Bild-Wiederherstellung;
Fig. 4 ein zusammengesetztes Strahlbild bei 6 Umläufen zur Bild-Wiederherstellung;
Fig. 5 ein zusammengesetztes Strahlbild bei 51 Umläufen zur Bild- Wiederherstellung;
Fig. 6 ein zusammengesetztes Strahlbild bei 56 Umläufen zur Bild- Wiederherstellung.

## Grundsätzlicher Resonatoraufbau

Alle Ausführungsbeispiele betreffen einen optischen Resonator für einen Laserstrahl. Der optische Resonator umfasst sechs Spiegel, die einen Ringresonator bilden. Jeweils ein Strahlweg verbindet zwei aufeinander folgende Spiegel miteinander. Die Spiegel sind in drei unterschiedlichen Ebenen angeordnet, um im Betrieb eine Bildrotation zu erzeugen, die eine Rotation des querschnittlichen Strahlbildes des Laserstrahls ist.

## Stand der Technik und Nachteil

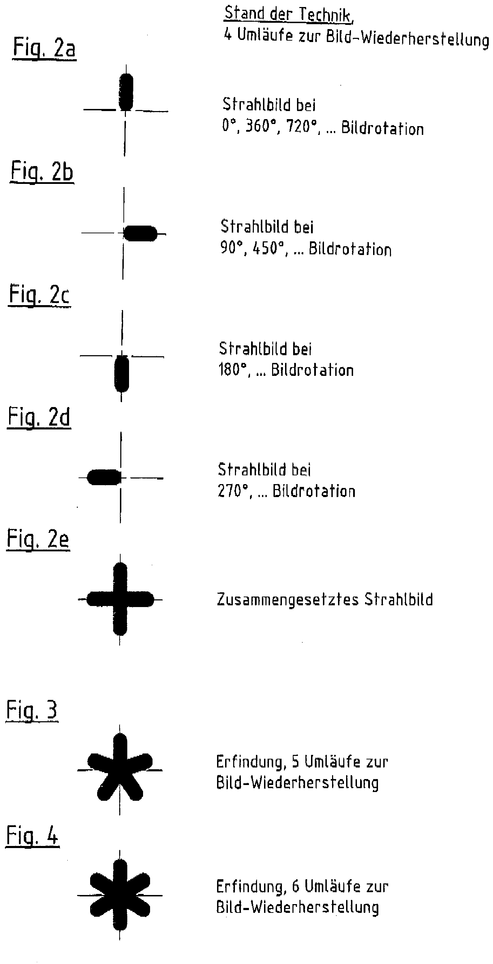

Die Fig. 2a bis 2e illustrieren, wie sich ein Strahlbild bei einer Bildrotation nach dem Stand der Technik zusammensetzt. Nach dem Stand der Technik ist eine Bildrotation von genau 90° pro Umlauf in einem Resonator vorgesehen. Die Spiegel sind derart räumlich angeordnet sind, dass im Betrieb genau 4 Umläufe im Resonator notwendig sind, bis an einem gleichen Ort innerhalb des Strahlenganges des Resonators die ursprüngliche Ausrichtung des Strahlbildes wieder vorliegt.

Die Fig. 2e zeigt das zusammengesetzte Strahlbild. Dieses setzt sich aus vielen Strahlbildern von beispielsweise ausgetretenen Teillaserstrahlen zusammen. Das zusammengesetzte Strahlbild weist, weil Vorsprünge vierfach versetzt erscheinen, einen leicht quadratischen Querschnitt und damit eine nicht optimale Strahlqualität auf.

## Strahlbildverbesserung

Um die Qualität des austretenden Laserstrahles zu verbessern, sind die Spiegel derart räumlich angeordnet,
dass der Bildrotationswinkel pro Resonatorumlauf derart ist,
dass mindestens fünf, bevorzugt 6 Resonatorumläufe notwendig sind, bis die ursprüngliche Strahlbildorientierung im Wesentlichen wiederhergestellt ist.

Anders ausgedrückt sind die Spiegel derart räumlich angeordnet,
dass der Bildrotationswinkel pro Resonatorumlauf die nachfolgenden Werte im Wesentlichen ausschließt:
90°, 120°, 180°, 240°, 270° und 360°, jeweils ± einer Abweichungstoleranz, die bei einer niedrigen Anzahl von Umläufen zur Bildwiederherstellung hoch ist und bei einer hohen Anzahl von Umläufen niedrig ist. Die Ausschlusswerte sind Vielfache der Werte der Quotienten des Divisors 360° und der Dividenden 2, 3 oder 4. Bevorzugt werden auch die nachfolgenden Werte, die dem Dividend 5 entsprechen, ausgeschlossen:
72°, 144°, 216°, 288°, jeweils ± einer Abweichungstoleranz.
Die Abweichungstoleranz beträgt

- ± 0,4°, wenn weniger als 10 Umläufe zur Bildwiederholung erforderlich sind.
- ± 0,4 bis 0,04°, wenn 10 bis 100 Umläufe zur Bildwiederholung erforderlich sind.
- ± 0,04°, wenn mehr als 100 Umläufen zur Bildwiederholung erforderlich sind.

Fig. 3 illustriert, wenn fünf Resonatorumläufe notwendig sind, bis die ursprüngliche Strahlbildorientierung wiederhergestellt ist.

Fig. 4 illustriert, wenn sechs Resonatorumläufe notwendig sind, bis die ursprüngliche Strahlbildorientierung wiederhergestellt ist.

Eine 6 bis 10-fache Symmetrie ist in vielen Fällen ausreichend, um eine gute Strahlqualität zu erzeugen.

## Resonator zur Erzeugung eines Puls-Laserstrahls

## - Bildrotationswinkel und Symmetrie

In einem Strahlengang eines Resonators ist ein optisches Verstärkermedium zur Ausbildung eines Pulslaserstrahls angeordnet. Im nachfolgenden Beispiel ist das Verstärkermedium ein parametrischer optischer Verstärker (OPA). Folglich ist der Resonator als optischer parametrischer Oszillator (OPO) ausgebildet. Die Pulsdauer beträgt beispielsweise 35 ns. Der Resonator ist 208 mm lang.

Aus einer Pulsdauer von 35 ns und einer Resonatorlänge von 208 mm berechnet sich eine Anzahl von insgesamt 51 Umläufen der Strahlung. Möchte man, dass die Anzahl der nötigen Umläufe im Resonator bis zur Wiederherstellung der ursprünglichen Strahlbildorientierung genau mit dem Ende der Pulsdauer erreicht wird, dann beträgt der Bildrotationswinkel etwa 7,06 °.

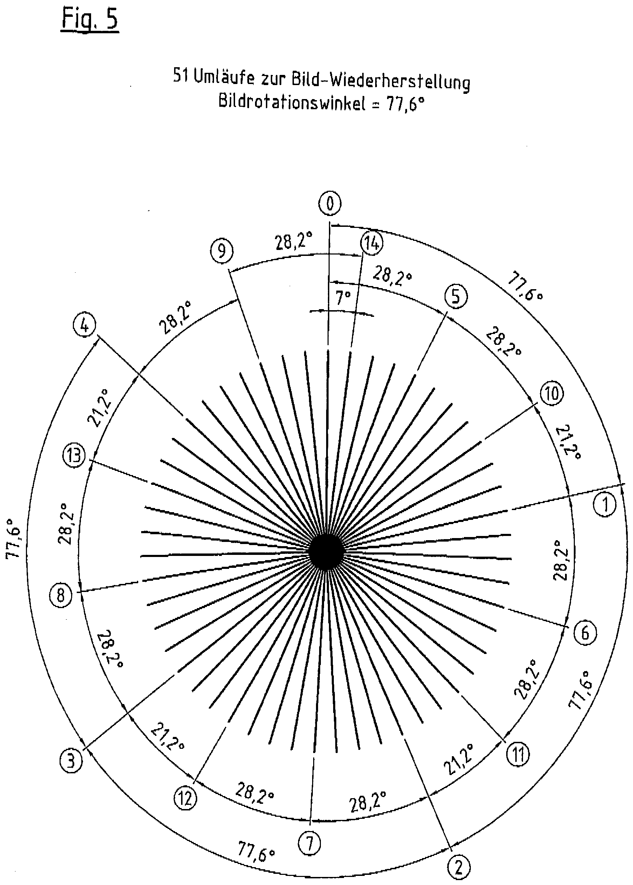

Die Fig. 5 zeigt ein zusammengesetztes Strahlbild, das sich aus Bildern einer rotierenden Linie zusammensetzt. Der Bildrotationswinkel pro Umlauf beträgt 77,64°. Dies entspricht etwa 11 x 7,06°.

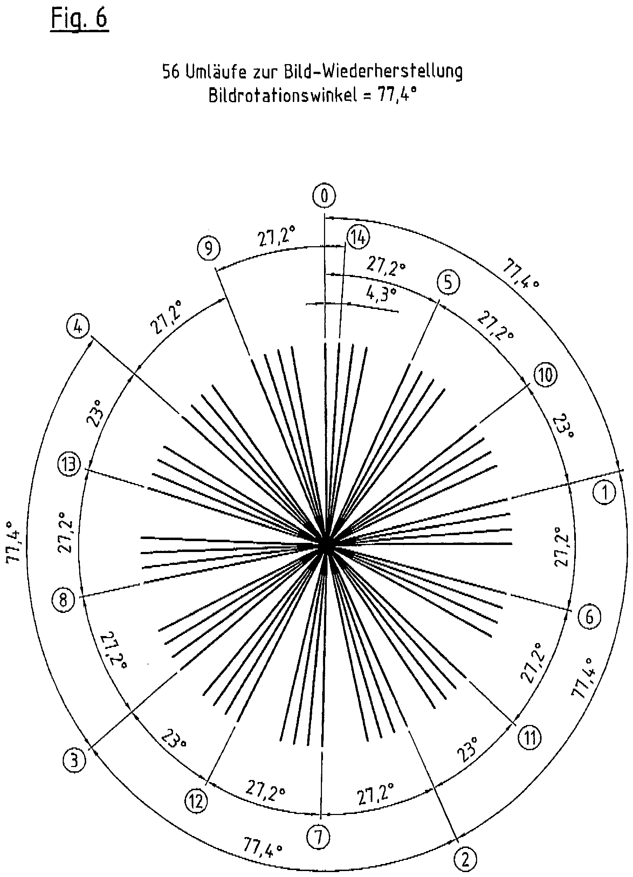

Wie man sieht, erhält man einen sehr hohen Grad an Symmetrie, wodurch ein Ausgangslaserstrahl ein Profil bekommt, welches experimentell kaum von einem runden Strahlprofil zu unterscheiden sein wird. Bei einem abgeänderten Winkel von 77,4°, entsprechend 56 Umläufen zur Bildwiederherstellung, entstehen Lücken in der Abbildung, zu sehen in Fig. 6. Diese sind jedoch auf Grund der immer noch hohen Symmetrie des Profils ebenso tauglich für eine Verbesserung der Stahlqualität.

## - Winkelauswahl am Beispiel einer 10-fach Symmetrie

Eine 6- bis 10-fache Symmetrie ist in vielen Fällen ausreichend, um eine gute Strahlqualität zu erzeugen. Für eine 10-fache Symmetrie gibt es mehrere Möglichkeiten:

   a) Bildrotation von 36°
   b) Bildrotation von 3 x 36° = 108°
   c) Bildrotation von 7 x 36° = 252°
   d) Bildrotation von 9 x 36° = 334°

Diese Werte gelten Modulo 360° und für beide Drehrichtungen, also im und gegen den Uhrzeigersinn. Bei den vorgenannten Drehwinkeln ist gewährleistet, dass erst nach 10 Umläufen ein Punkt wieder auf sich selbst fallen kann.

Es ist vorteilhaft, wenn die Anzahl der nötigen Umläufe im Resonator bis zur Wiederherstellung der im Wesentlichen ursprünglichen Strahlbildorientierung nach 10 bis 30 % der Pulsdauer erreicht werden.

Im vorliegenden Beispiel des 208 mm - Resonators ergibt sich bei 10 Umläufen zur Bildwiederholung eine Bildwiederholungs- oder Selbstkonsistenzlänge von
10 x 208 mm = 2080 mm
und eine dafür benötigte Zeit von 6,9 ns. Dies entspricht gerundet 20 % der Pulsdauer.

Es ist von Vorteil, für das Design des Resonators nicht den kleinsten Winkel zu wählen, sondern den Winkel, der auch das Kriterium erfüllt, dass er aus dem Winkelbereich 90° bis 180° ausgewählt wird, wobei der Winkelbereich für Modulo 360° und für beide Drehrichtungen gilt. Diese Maßnahme lässt sich als Über-Kreuz-Effekt bezeichnen.

Im obigen Beispiel wäre dies Fall b) oder c). Damit findet bereits in wenigen Umläufen eine langreichweitige Synchronisation über den Querschnitt statt, welche ein robusteres und störungs-unanfälligeres Strahlprofil erzeugt. Anders ausgedrückt bedeutet dies, dass bereits nach wenigen Umläufen ein hohes Maß an Symmetrie entsteht. Würde man Fall a) wählen, erhält man die Symmetrie erst nach den vollen 10 Umläufen. Nach 5 Umläufen hätte man nur einen Halbkreis synchronisiert, was noch keiner guten Strahlqualität entspricht. 5 Umläufe im Fall b) erzeugen dagegen bereits ein viel rotationssymmetrischeres Profil.

**- Äquivalente Winkel**

Betrachtet man den einfachen Winkel, das heißt den Fall a), sind prinzipiell die Winkel der Fälle b) bis d) äquivalent, da sie auf eine identische Geometrie führen. Tritt die Bildwiederherstellung oder Selbstkonsistenz erstmals nach N Umläufen auf, so beträgt der einfache Bildrotationswinkel $\alpha = \dfrac{360°}{N}$. Dann erhält man die identische N-fache Symmetrie für alle Bildrotationswinkel $\alpha' = k\alpha$, bei denen $k$ kein Teiler von $N$ ist und der Quotient $q = \dfrac{(m-1)\alpha'}{360°}$ für alle $1 \le m \le N$, $m$ ganz, keine ganze Zahl ist.

**Resonator zur Erzeugung eines cw-Laserstrahls**

Betrachtet werden nun Fälle, bei denen im Strahlengang des Resonators ein optisches Verstärkermedium zur Ausbildung eines cw-Laserstrahls angeordnet ist. Der Resonator weist, wie im vorangegangenen Beispiel, eine Länge von 208 mm auf.

Zunächst wird eine Laseranordnung mit einer niedrigen Kohärenz betrachtet. Hierunter fällt ein 1,06 μm - Laser mit einer Linienbreite von 0,1 nm oder 27 GHz. Dieser Laser besitzt eine Kohärenzzeit von 6 ps. Diese Zeit ist weitaus geringer als die einfache Resonator-Umlaufzeit. Mit der Ausbildung des Resonators, dass fünf oder mehr Resonatorumläufe notwendig sind, bis das ursprüngliche Strahlbild im Wesentlichen wiederhergestellt ist, erzielt man eine Verbesserung der Strahlqualität aus geometrischen Gründen, weil eine Symmetrisierung des Profils erhalten wird. Vorzugsweise wählt man eine Umlaufzahl von 6-50 zur Bildwiederholung.

Im Fall eines Lasers hoher Kohärenz, zum Beispiel bei einer Linienbreite von 1 MHz, ergibt sich eine Kohärenzlänge von 48 m. Im Gegensatz zum Fall vorher ist es nun von Vorteil, wenn die Anzahl der nötigen Umläufe im Resonator bis zur Wiederherstellung der im Wesentlichen ursprünglichen Strahlbildorientierung nach 10 bis 30 % der Kohärenzzeit erreicht werden. Für den 208 mm - Resonator liegen beispielsweise 23 Umläufe bis zur Selbstabbildung nach 10 % der Kohärenzzeit vor. Das entspricht einem einfachen Bildrotations-Winkel von ca. 15°. Um den vorgenannten Über-Kreuz-Effekt auszunutzen, kann ein Rotationswinkel von beispielsweise 7 x 15°, also von 105° gewählt werden.

Bei noch höherer Kohärenz, zum Beispiel bei einer Linienbreite von 50 kHz, ergibt sich eine Kohärenzlänge von 0,95 km, so dass zur Symmetrieerzeugung bei 10 % der Kohärenzzeit bei einem 208 mm - Resonator 460 Umläufe bis zur Selbstabbildung ausreichen. Dies entspricht einem einfachen Bildrotations-Winkel von ca. 0,78°. Um wiederum den vorgenannten Über-Kreuz-Effekt auszunutzen, kann ein Rotationswinkel von beispielsweise 137 x 0,78°, also von 106,9° gewählt werden.

**Resonatoraufbau mit 6 Spiegeln**

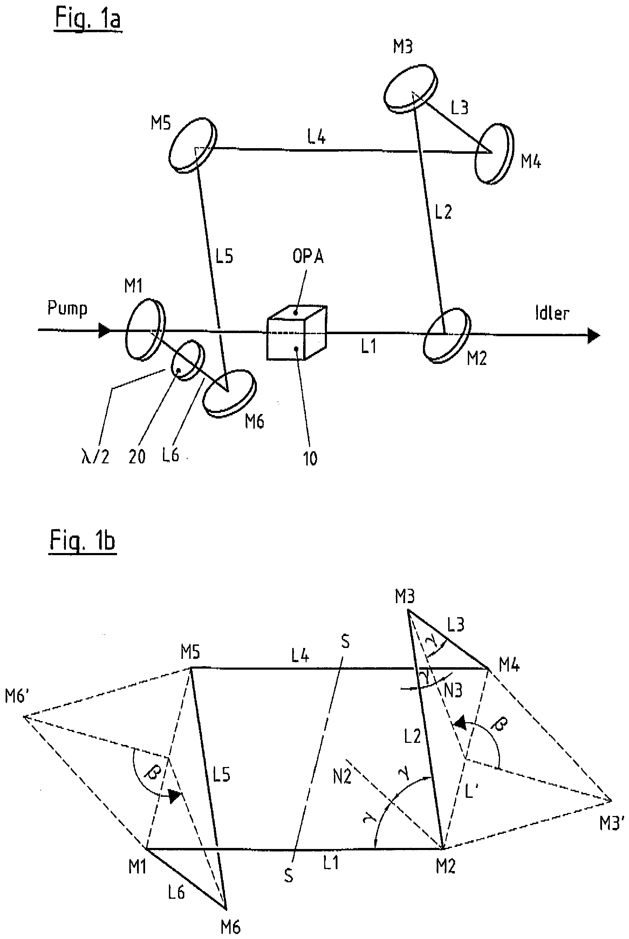

Fig. 1a zeigt einen optischen Resonator für einen Laserstrahl. Der Resonator umfasst sechs Spiegel M1 bis M6. Die Spiegel M1 bis M6 bilden einen Ringresonator. Jeweils ein Strahlweg L1 bis L6 verbindet zwei aufeinander folgende Spiegel aus der Gruppe der Spiegel M1 bis M6 miteinander. Die Spiegel M1 bis M6, bzw. die Strahlwege L1 bis L6, sind in drei unterschiedlichen Ebenen angeordnet, um im Betrieb eine Bildrotation zu erzeugen, die eine Rotation des querschnittlichen Strahlbildes des Laserstrahls ist.

Der erste Strahlweg L1 verbindet den ersten Spiegel M1 mit dem zweiten Spiegel M2, der zweite Strahlweg L2 den zweiten Spiegel M2 mit einem dritten Spiegel M3, der dritte Strahlweg L3 den dritten Spiegel M3 mit dem vierten Spiegel M4, der vierte Strahlweg L4 den vierten Spiegel M4 mit dem fünften Spiegel M5, der fünfte Strahlweg L5 den fünften Spiegel M5 mit dem sechsten Spiegel M6 und der sechste Strahlweg L6 den sechsten Spiegel M6 mit dem ersten Spiegel M1 miteinander.

Im Resonator ist ein optisches Verstärkermedium angeordnet, das ein parametrischer Verstärker (OPA) 10 ist. Eine λ/2-Platte 20 bzw. eine geeignete Verzögerungsplatte dient dafür, eine lineare Polarisation für das resonante Signal am OPA 10 nach bereits einem Umlauf aufrechtzuerhalten. Die λ/2-Platte 20 ist im Strahlengang L6 eingebaut. Der Resonator ist Teil eines optisch parametrischen Oszillators (OPO). Ein Pumplaserstahl wird über M1 eingekoppelt. Ein Idler-Laserstrahl wird über den Spiegel M2 ausgekoppelt.

Der OPA 10 im Strahlengang stellt ein doppelbrechendes Medium dar. Das doppelbrechende Medium bewirkt zusätzlich, dass in einer Richtung ein sogenannter Walk-off Effekt auftritt. Dies kommt einer guten, flächigen Korrelation bei vielen Umläufen zu Gute.

Fig. 1a zeigt ferner, dass der erste Strahlweg L1 parallel zum vierten Strahlweg L4 angeordnet ist und beide parallelen Strahlwege eine Grundebene bilden. Der erste Strahlweg L1 und der vierte Strahlweg L4 sind längenvariabel zur Aufnahme unterschiedlich großer optischer Bauteil. Im Ausführungsbeispiel ist im ersten Strahlweg ein einziges optisches Verstärkermedium angeordnet. In Abweichung hierzu können auch mehrere optische Verstärkermedien im ersten Strahlweg L1 und/oder vierten Strahlweg L4 angeordnet sein.

Der dritte Spiegel M3 und der sechste Spiegel M6, also die beiden Spiegel, die nicht endseitig des ersten Strahlweges L1 und vierten Strahlweges L4 angeordnet sind, sind jeweils außerhalb der Grundebene angeordnet sind und tragen jeweils zur Erzeugung einer Bildrotation bei.

In Fig. 1b sind zusätzlich Hilfslinien eingezeichnet. Um eine einfache Konstruktion zu erhalten, sind der erste Spiegel M1 gegenüber dem zweiten Spiegel M2, der fünfte Spiegel M5 gegenüber dem vierten Spiegel M4 und der sechste Spiegel M6 gegenüber dem dritten Spiegel M3 um eine Spiegelachse S spiegelsymmetrisch angeordnet.

Zum Erhalt einer hohen Teilegleichheit sind die Spiegel M1 bis M6 derart räumlich angeordnet, dass die Spiegel alle einen gleichen Einfallswinkel $\alpha$ für den umlaufenden Laserstrahl aufweisen.

Der in Fig. 1a und 1b dargestellte Resonator weist folgende Werte auf:

Der an allen Spiegeln M1 bis M6 gleiche Einfallswinkel beträgt $\gamma = 32{,}73°$. Der eingezeichnete Klappwinkel $\beta$ beträgt 122,1°. Der Klappwinkel $\beta$ ist auf die Normale N3 bezogen, die durch M3 verläuft und senkrecht auf einer eingezeichneten Hilfslinie L' steht. Die Hilfslinie L' ist die Strecke zwischen den Spiegeln M2 und M4. M2, M3, und M4 bilden ein gleichschenkliges Dreieck (L2=L3). Ebenso bilden M1, M5 und M6 ein gleichschenkliges Dreieck. Daher ist das Verhältnis der Hilfslinie L' zu den Strahlwegen L2 und L3 (auch zu L5 oder L6) jeweils 1,08. Der Bildrotationswinkel beträgt 77,448°. Die Strahlwege L1 und L4 sind, wie zuvor dargelegt, parallel zueinander und längenvariabel.

In einem anderen Ausführungsbeispiel weist der Resonator folgende Werte auf:

Der an allen Spiegeln M1 bis M6 gleiche Einfallswinkel beträgt $\gamma = 30{,}0°$. Dann bilden M2, M3, und M4 bilden ein gleichseitiges Dreieck (L2=L3=L'). Ebenso bilden M1, M5 und M6 ein gleichseitiges Dreieck. Der Bildrotationswinkel beträgt dann 63,173°. Die Strahlwege L1 und L4 sind, wie zuvor dargelegt, parallel zueinander und längenvariabel.

Die räumliche Anordnung der Spiegel ist jeweils mit fachmännischem Wissen zu berechnen, um einen gewünschten Bildrotationswinkel pro Umlauf zu erhalten.

## Patentansprüche

1. Optischer Resonator für einen Laserstrahl, mit folgenden Merkmalen:

   • der optische Resonator umfasst mindestens 4 Spiegel (M1-M6),
   • die Spiegel (M1-M6) bilden einen Ringresonator,
   • jeweils ein Strahlweg (L1-L6) verbindet zwei aufeinander folgende Spiegel (M1-M6) miteinander,
   • die Spiegel (M1-M6) sind in mindestens zwei unterschiedlichen Ebenen angeordnet,

      • um im Betrieb eine Bildrotation zu erzeugen, die eine Rotation des querschnittlichen Strahlbildes des Laserstrahls ist, derart,

   • dass die Spiegel (M1-M6) derart räumlich angeordnet sind,
   • dass der Bildrotationswinkel pro Resonatorumlauf derart ist,
   • dass mindestens fünf Resonatorumläufe notwendig sind, bis die ursprüngliche Strahlbildorientierung im Wesentlichen wiederhergestellt ist, wobei unter einer im Wesentlichen wiederhergestellten Strahlbildorientierung die ursprüngliche Strahlbildorientierung ±4° zu verstehen ist, wenn bis zu 100 Umläufe zur Bildwiederholung erforderlich sind, beziehungsweise die ursprüngliche Strahlbildorientierung ±1°, wenn mehr als 100 Umläufe zur Bildwiederholung erforderlich sind,

   **dadurch gekennzeichnet,**

      • **dass** der optische Resonator genau sechs Spiegel (M1-M6) und sechs Strahlwege (L1-L6) umfasst, derart,
      • **dass** ein erster Strahlweg (L1) einen ersten Spiegel (M1) mit einem zweiten Spiegel (M2), ein zweiter Strahlweg (L2) den zweiten Spiegel (M2) mit einem dritten Spiegel (M3), ein dritter Strahlweg (L3) den dritten Spiegel (M3) mit einem vierten Spiegel (M4), ein vierter Strahlweg (L4) den vierten Spiegel (M4) mit einem fünften Spiegel (M5), ein fünfter Strahlweg (L5) den fünften Spiegel (M5) mit einem sechsten Spiegel (M6) und der sechste Strahlweg (L6) den sechsten Spiegel (M6) mit dem ersten Spiegel (M1) miteinander verbindet,
      • **dass** der erste Strahlweg (L1) parallel zum vierten Strahlweg (L4) angeordnet ist und beide parallelen Strahlwege (L1, L4) eine Grundebene bilden,
      • **dass** der dritte Spiegel (M3) und der sechste Spiegel (M6), also die beiden Spiegel, die nicht endseitig des ersten Strahlweges (L1) und vierten Strahlweges (L4) angeordnet sind, jeweils außerhalb der Grundebene angeordnet sind.

2. Resonator nach Anspruch 1, **dadurch gekennzeichnet, dass** die Spiegel (M1-M6) derart räumlich angeordnet sind, dass der Bildrotationswinkel zusätzlich das Kriterium erfüllt, dass er aus dem Winkelbereich 90° bis 180° ausgewählt ist, wobei der Winkelbereich für Modulo 360° und für beide Drehrichtungen gilt.

3. Resonator nach Anspruch 1 oder 2, **dadurch gekennzeichnet, dass** im Strahlengang des Resonators ein optisches Verstärkermedium zur Ausbildung eines cw-Laserstrahls angeordnet ist und dass die Anzahl der nötigen Umläufe im Resonator bis zur Wiederherstellung der im Wesentlichen ursprünglichen Strahlbildorientierung nach 10 bis 30 % der Kohärenzzeit erreichbar ist.

4. Resonator nach Anspruch 1 oder 2, **dadurch gekennzeichnet, dass** im Strahlengang des Resonators ein optisches Verstärkermedium zur Ausbildung eines Pulslaserstrahls angeordnet ist und dass die Anzahl der nötigen Umläufe im Resonator bis zur Wiederherstellung der im Wesentlichen ursprünglichen Strahlbildorientierung nach 10 bis 30 % der Pulsdauer erreichbar ist.

5. Optischer Resonator nach einem der Ansprüche 1 bis 4, **dadurch gekennzeichnet, dass** im Strahlengang des Resonators ein doppelbrechendes Medium oder ein strahlversetzendes Element angeordnet ist.

6. Optischer Resonator nach einem der Ansprüche 1 bis 5, **dadurch gekennzeichnet, dass** im ersten Strahlweg (L1) und/oder vierten Strahlweg (L4) ein oder mehrere optische Verstärkermedien angeordnet sind.

7. Optischer Resonator nach einem der Ansprüche 1 bis 6, **dadurch gekennzeichnet, dass** der erste Spiegel (M1) gegenüber dem zweiten Spiegel (M2), der fünfte Spiegel (M5) gegenüber dem vierten Spiegel (M4) und der sechste Spiegel (M6) gegenüber dem dritten Spiegel (M3) um eine Spiegelachse (S) spiegelsymmetrisch angeordnet sind.

8. Optischer Resonator nach mindestens einem der Ansprüche 1 bis 7, **dadurch gekennzeichnet, dass** die Spiegel (M1-M6) derart räumlich angeordnet sind, dass die Spiegel (M1-M6) alle einen gleichen Einfallswinkel für den umlaufenden Laserstrahl aufweisen.

**Claims**

1. Optical resonator for a laser beam, having the following characteristics:

   • the optical resonator comprises at least 4 mirrors (M1-M6),
   • the mirrors (M1-M6) form a ring resonator,
   • Each beam path (L1-L6) connects two consecutive mirrors (M1-M6) to each other,
   • the mirrors (M1-M6) are arranged in at least two different planes,

      • to generate image rotation during operation, which is a rotation of the cross-sectional beam image of the laser beam, such

   • that the mirrors (M1-M6) are spatially arranged,
   • that the image rotation angle per resonator revolution is such,
   • that at least five resonator revolutions are necessary, until the original beam image orientation is substantially restored, where a substantially restored beam image orientation means the original beam image orientation ±4°, if up to 100 revolutions are required to repeat the image, respectively the original beam image orientation ±1°, if more than 100 revolutions are required to repeat the image.

   **Wherein,**

      • that the optical resonator comprises exactly six mirrors (M1-M6) and six beam paths (L1-L6), such that,
      • a first beam path (L1) connects a first mirror (M1) with a second mirror (M2), a second beam path (L2) connects the second mirrors (M2) with a third mirror (M3), a third beam path (L3) connects the third mirror (M3) with a fourth mirror (M4), a fourth beam path (L4) connects the fourth mirror (M4) with a fifth mirror (M5), a fifth beam path (L5) connects a fifth mirror (M5) with a sixth mirror (M6) and the sixth beam path (L6) connects the sixth mirror (M6) with the first mirror (M1),
      • the first beam path (L1) is arranged parallel to the fourth beam path (L4) and both parallel beam paths (L1, L4) form a basic plane,
      • the third mirror (M3) and the sixth mirror (M6), i.e. the two mirrors which are not arranged at the ends of the first beam path (L1) and the fourth beam path (L4), are each arranged outside the basic plane.

2. Resonator according to claim 1, wherein the mirrors (M1-M6) are spatially arranged in such a way that the image rotation angle additionally satisfies the criterion, that it is selected from the angular range 90° to 180°, whereby the angle range applies to Modulo 360° and to both directions of rotation.

3. Resonator according to claim 1 to 2, wherein that an optical amplifier medium is arranged in the beam path of the resonator in order to form a cw laser beam and that the number of necessary revolutions in the resonator until the substantially original beam image orientation is restored after 10 to 30 % of the coherence time.

**4.** Resonator according to claim 1 to 2, wherein an optical amplifying medium is arranged in the beam path of the resonator to form a pulsed laser beam and that the number of necessary revolutions in the resonator until the substantially original beam image orientation is restored after 10 to 30 % of the pulse duration is reached.

**5.** Optical resonator according to claim 1 to 4, wherein a birefringent medium or a beam-displacing element is arranged in the beam path of the resonator.

**6.** Optical resonator according to claim 1 to 5, wherein one or more optical amplifier media are arranged in the first beam path (L1) and/or fourth beam path (L4).

**7.** Optical resonator according to claim 1 to 6, wherein the first mirror (M1) is arranged mirror symmetrically relative to the second mirror (M2), the fifth mirror (M5) is arranged mirror symmetrically relative to the fourth mirror (M4) and the sixth mirror (M6) is arranged mirror symmetrically relative to the third mirror (M3) about a mirror axis (S).

**8.** Optical resonator according at least to claim 1 to 7, wherein the mirrors (M1-M6) are spatially arranged such that the mirrors (M1-M6) all have the same angle of incidence for the circulating laser beam.

**Revendications**

**1.** Résonateur optique pour un faisceau laser, comportant les caractéristiques suivantes :

• le résonateur optique comprend au moins 4 miroirs (M1-M6),
• les miroirs (M1-M6) forment un résonateur en anneau,
• un trajet de faisceau à chaque fois (L1-L6) relie deux miroirs successifs (M1-M6) l'un à l'autre,
• les miroirs (M1-M6) sont disposés dans au moins deux plans différents,

• pour générer une rotation de l'image pendant le fonctionnement, qui est une rotation de l'image en coupe transversale du faisceau laser, de telle sorte,

• que les miroirs (M1-M6) soient disposés de telle manière dans l'espace,
• en ce que l'angle de rotation de l'image par révolution du résonateur est tel,
• qu'au moins cinq révolutions du résonateur sont nécessaires, jusqu'à ce que l'orientation originale de l'image du faisceau soit pour l'essentiel rétablie, où l'orientation de l'image du faisceau pour l'essentiel rétablie signifie l'orientation de l'image du faisceau d'origine à ±4°, si jusqu'à 100 rotations sont nécessaires pour la répétition de l'image, respectivement l'orientation originale de l'image du faisceau à ±1°, si plus de 100 rotations sont nécessaires pour la répétition de l'image

**caractérisé en ce que,**

• le résonateur optique comprend exactement six miroirs (M1-M6) et six trajets de faisceau (L 1-L6), de telle façon que,
• un premier trajet de faisceau (L1) relie un premier miroir (M1) à un deuxième miroir (M2), un deuxième trajet de faisceau (L2) relie un deuxième miroir (M2) à un troisième miroir (M3), un troisième trajet de faisceau (L3) relie un troisième miroir (M3) à un quatrième miroir (M4), un quatrième trajet de faisceau (L4) relie un quatrième miroir (M4) à un cinquième miroir (M5), un cinquième trajet de faisceau (L5) relie un cinquième miroir (M5) à un sixième miroir (M6) et le sixième trajet de faisceau (L6) relie le sixième miroir (M6) au premier miroir (M1),
• le premier trajet de faisceau (L 1) est parallèle au quatrième trajet de faisceau (L4) et que les deux trajets de faisceau parallèles (L 1, L4) forment un plan de base,
• le troisième miroir (M3) et le sixième miroir (M6), c'est-à-dire les deux miroirs qui ne sont pas disposés côté extrémité du premier trajet de faisceau (L 1) et du quatrième trajet de faisceau (L4), sont respectivement disposés à l'extérieur du plan de base.

**2.** Résonateur selon la revendication 1, **caractérisé en ce que** les miroirs (M1-M6) sont disposés dans l'espace de telle sorte que l'angle de rotation de l'image satisfait en outre au critère selon lequel il est sélectionné dans la plage angulaire de 90 à 180°, où la plage angulaire s'applique à Modulo 360° et aux deux sens de rotation.

**3.** Résonateur selon l'une quelconque des revendications 1 à 2, **caractérisé en ce qu'**un milieu d'amplification optique est disposé dans le trajet du faisceau du résonateur pour former un faisceau laser cw et que le nombre de révolutions nécessaires dans le résonateur jusqu'à ce que l'orientation essentiellement originale de l'image du faisceau soit rétablie après 10 à 30 % du temps de cohérence.

**4.** Résonateur selon l'une quelconque des revendications 1 à 2, **caractérisé en ce qu'**un milieu d'amplification optique est disposé dans le trajet du faisceau du résonateur pour former un faisceau laser pulsé et que le nombre de révolutions nécessaires dans le résonateur jusqu'à ce que l'orientation essentiellement originale du faisceau soit rétablie après 10 à 30 % de la durée de l'impulsion.

**5.** Résonateur optique selon l'une quelconque des revendications 1 à 4, **caractérisé en ce qu'**un milieu biréfringent ou un élément déplaçant le faisceau est disposé dans le trajet du faisceau du résonateur.

**6.** Résonateur optique selon l'une quelconque des revendications 1 à 5, **caractérisé en ce qu'**un ou plusieurs supports d'amplification optique sont disposés dans le premier trajet du faisceau (L1) et/ou le quatrième trajet du faisceau (L4).

**7.** Résonateur optique selon l'une quelconque des revendications 1 à 6, **caractérisé en ce que** le premier miroir (M1) est disposé symétriquement par rapport au deuxième miroir (M2), le cinquième miroir (M5) est disposé symétriquement par rapport au quatrième miroir (M4) et le sixième miroir (M6) est disposé symétriquement par rapport au troisième miroir (M3) autour d'un axe de miroir (S).

**8.** Résonateur optique selon au moins l'une des revendications 1 à 7, **caractérisé en ce que** les miroirs (M1-M6) sont disposés dans l'espace de telle sorte que les miroirs (M1-M6) ont tous le même angle d'incidence pour le faisceau laser circulant.

## Fig. 1a

## Fig. 1b

**Fig. 2a**

Stand der Technik,
4 Umläufe zur Bild-Wiederherstellung

Strahlbild bei
0°, 360°, 720°, ... Bildrotation

**Fig. 2b**

Strahlbild bei
90°, 450°, ... Bildrotation

**Fig. 2c**

Strahlbild bei
180°, ... Bildrotation

**Fig. 2d**

Strahlbild bei
270°, ... Bildrotation

**Fig. 2e**

Zusammengesetztes Strahlbild

**Fig. 3**

Erfindung, 5 Umläufe zur
Bild-Wiederherstellung

**Fig. 4**

Erfindung, 6 Umläufe zur
Bild-Wiederherstellung

## Fig. 5

51 Umläufe zur Bild-Wiederherstellung
Bildrotationswinkel = 77,6°

## Fig. 6

56 Umläufe zur Bild-Wiederherstellung
Bildrotationswinkel = 77,4°

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6775054 B1
- US 20100079851 A1
- US 20080013588 A1
- US 4818087 A
- US 6647033 B1
- US 20100079851 A